**Europäisches Patentamt**

**European Patent Office**

**Office européen des brevets**

(19)

(11) Veröffentlichungsnummer : **0 072 945
B1**

(12)

# EUROPÄISCHE PATENTSCHRIFT

(45) Veröffentlichungstag der Patentschrift :
21.11.85

(51) Int. Cl.⁴ : **B 62 J   9/02**

(21) Anmeldenummer : **82107083.6**

(22) Anmeldetag : **05.08.82**

(54) Abschliessbarer Sicherheitsbehälter für Zweiräder.

(30) Priorität : 17.08.81 DE 8123974 U
20.08.81 DE 8124288 U
30.01.82 DE 8202372 U

(43) Veröffentlichungstag der Anmeldung :
02.03.83 Patentblatt 83/09

(45) Bekanntmachung des Hinweises auf die Patenter-
teilung : 21.11.85 Patentblatt 85/47

(84) Benannte Vertragsstaaten :
AT BE CH FR GB IT LI LU NL SE

(56) Entgegenhaltungen :
DE-C-   208 424
FR-A-   443 735
FR-A- 2 291 084
FR-A- 2 355 707
GB-A- 2 047 644
US-A- 3 947 954

(73) Patentinhaber : Weiss, Heinz
Düsseldorfer Str. 103
D-4000 Düsseldorf 11 (DE)

(72) Erfinder : Weiss, Heinz
Düsseldorfer Str. 103
D-4000 Düsseldorf 11 (DE)

(74) Vertreter : Dipl.-Ing. H. Hauck Dipl.-Phys. W. Schmitz
Dipl.-Ing. E. Graalfs Dipl.-Ing. W. Wehnert Dr.-Ing. W.
Döring
Kaiser-Wilhelm-Ring 41
D-4000 Düsseldorf 11 (DE)

## Beschreibung

Die vorliegende Erfindung betrifft einen abschließbaren Sicherheitsbehälter für Zweiräder nach dem Oberbegriff des Patentanspruchs 1.

Bei Zweirädern ist es bekannt, die für Reparaturen benötigten Werkzeuge in Taschen aus Leder, Kunststoff etc. unterzubringen, die an einem Teil des Zweiradrahmens bzw. am Sattel mittels Riemen, Bändern etc. befestigt werden. Die Taschen selbst können dabei abschließbar ausgebildet sein ; aufgrund der lösbaren Befestigungsmittel ist jedoch nur ein unzureichender Schutz gegen Diebstahl vorhanden. Darüber hinaus sind derartige Taschen nicht zur Aufbewahrung von sperrigen, insbesondere länglichen Teilen (Luftpumpe), geeignet.

Es ist desweiteren bei Zweirädern bekannt (FR-A-2 291 084), Behälter am Zweiradrahmen mit Hilfe von Klemmen bzw. Bändern anzubringen. Hierzu zählen insbesondere Trinkflaschen für Radrennfahrer. Die Klemmen bzw. Bänder sind dabei so ausgestaltet, daß die Flaschen in einfacher Weise auch während der Fahrt abgenommen werden können. An eine abschließbare Befestigung der Flaschen bzw. Behälter ist hierbei nicht gedacht.

Es ist ferner bekannt (US-A-3 947 954), bei Motorrädern über dem Tankeinfüllstutzen eine Abdeckung anzubringen, die ferner zur Aufnahme eines Radios geeignet ist. Diese Abdeckung ist abschließbar und weist ein Schloß auf, dessen Verriegelungslasche eine fest am Motorrad angebrachte Lasche hintergreift. Die Abdeckung ist kastenförmig ausgebildet.

Ein abschließbarer Sicherheitsbehälter mit den Merkmalen des Oberbegriffs des Patentanspruchs 1 ist aus der FR-A-443 735 bekannt. Die beiden schalenförmigen Behälterteile sind hierbei ineinanderschiebbar ausgebildet und werden über ein Vorhängeschloß aneinander geschlossen. Die Befestigung des einen Behälterteiles am Rahmenelement erfolgt über Schellen, die sich durch am Behälterteil befestigte Bügel und um das Rahmenelement herum erstrecken. Sie werden mittels Schrauben am Rahmenelement fixiert.

Der Erfindung liegt die Aufgabe zugrunde, einen Sicherheitsbehälter der angegebenen Art zu schaffen, der bei einer möglichst engen Anpassung an das zugehörige Rahmenelement nicht nur als solcher abschließbar ist, sondern der gleichzeitig so mit dem Rahmenelement verriegelbar ist, daß der Behälter von diesem nicht unerlaubt entfernt werden kann.

Diese Aufgabe wird erfindungsgemäß durch einen abschließbaren Sicherheitsbehälter mit den kennzeichnenden Merkmalen des Patentanspruchs 1 gelöst.

Der erfindungsgemäße Sicherheitsbehälter ist somit zweiteilig ausgebildet, wobei der als Deckel ausgebildete zweite Behälterteil auf den schalenförmigen Behälterteil aufsetzbar und mit diesem verschließbar ist. Die Befestigung des schalenförmigen Behälterteils am Rahmenelement ist so gewählt, daß sie ohne Zugang zum Sicherheitsbehälter von außen nicht lösbar ist. Zur Befestigung des Sicherheitsbehälters wird das Rast- bzw. Klemmverbindungselement zuerst auf das Rahmenelement gesetzt, wonach der schalenförmige Behälterteil derart auf das Element gesetzt wird, daß dessen freie Enden in den Behälterteil eingreifen und dadurch unter Vorspannung gesetzt werden. Sie treten mit einem an der Innenseite des Behälterteils angeordneten Arretierungselement in Eingriff, wobei durch die erzeugte Vorspannung ein Klemmeffekt bewirkt wird. Zum Lösen des Behälterteils vom Rahmenelement können die freien Enden des Elementes mit Hilfe eines Werkzeugs, beispielsweise eines Schraubenziehers, von den Innenseiten des Behälterteils nach innen gedrückt werden, so daß sich der Behälterteil nach oben entfernen läßt. Das Element kann dann vom Rahmenelement abgenommen werden.

Der Sicherheitsbehälter kann so am Rahmenelement angebracht werden, daß er entweder oberhalb oder unterhalb desselben angeordnet ist. Beide Montagemöglichkeiten sind mit der vorstehend geschilderten Art der Befestigung durchführbar.

Um eine sichere Befestigung des zweiten Behälterteils am schalenförmigen (ersten) Behälterteil zu ermöglichen, ist der zweite Behälterteil an einer Endwand mit einer eine Halterung an der Endwand des ersten Behälterteils hintergreifenden Rastnase und an der anderen Endwand mit dem Verriegelungselement für die seitlich am ersten Behälterteil angebrachte Verriegelungseinrichtung (Schloß) versehen. Wenn daher der zweite Behälterteil (Deckel) auf den ersten Behälterteil aufgebracht werden soll, wird zuerst die Rastnase unter die Halterung geführt und dann das andere Deckelende auf den ersten Behälterteil gesetzt. Zweckmäßigerweise weist die Verriegelungseinrichtung (Schloß) eine durch einen Schlüssel drehbare und mit dem Verriegelungselement in Eingriff bringbare Verriegelungslasche auf. Diese Verriegelungslasche wird durch Drehen des Schlüssels im Schloß gedreht, bis sie das Verriegelungselement am Deckel hintergreift. Wenn der Schlüssel abgezogen wird, ist somit eine Verriegelung zwischen Deckel und erstem Behälterteil hergestellt. Durch die die Halterung untergreifende Rastnase kann auch das andere Deckelende nicht vom ersten Behälterteil gelöst werden.

Um Deckel und ersten Behälterteil an ihren Stoßflächen auch über ihrer Längserstreckung zu arretieren, sind zweckmäßigerweise am offenen Ende der Seitenwände des ersten Behälterteils innere Führungsstege für den zweiten Behälterteil angeordnet. Es versteht sich, daß dabei die Deckelwände mit entsprechenden Ausnehmungen zur Aufnahme dieser Führungsstege versehen sind. Die Führungsstege erstrecken sich vorteilhafterweise nahezu über die gesamte Länge des Behälters, wobei lediglich die vorderen und hinteren Endbereiche frei bleiben können, um ein Einsetzen der Rastnase sowie ein Aufsetzen des anderen Deckelendes zu ermöglichen.

Der zweite Behälterteil (Deckel) ist vorzugsweise so ausgebildet, daß er im vorderen und hinteren Endbereich je eine Querwand mit einer nach innen vorstehenden Nase zum Festklemmen einer Luftpumpe aufweist. Diese Ausgestaltung ist insbesondere dann von Vorteil, wenn der Sicherheitsbehälter zur Aufbewahrung des zugehörigen Werkzeugs für ein Zweirad dienen soll. Die Behälterbreite ist bei dieser Ausführungsform so gewählt, daß die Luftpumpe gerade im Deckel untergebracht werden kann.

Obwohl der erste Behälterteil grundsätzlich nicht unbedingt einen Boden aufweisen muß, ist er bei einer speziellen Ausführungsform mit einem an die Form des Rahmenelementes angepaßten Boden versehen, der mit mindestens zwei gegenüberliegenden Randöffnungen zur Durchführung der freien Enden des Rast- bzw. Klemmverbindungselementes (Schelle) ausgestattet ist. An den Seitenwänden des ersten Behälterteiles sind dabei oberhalb der Bodenöffnungen nach innen vorspringende Arretierungsnasen vorgesehen, die von den abgewickelten freien Schellenenden hintergriffen werden. Zweckmäßigerweise ist am vorderen und hinteren Endbereich des Behälters jeweils eine Schelle zur Befestigung desselben angeordnet.

Auch eine als Schale ausgebildete Befestigung, die sich über die ganze Behälterlänge erstreckt und den Rahmenteil ganz umschließt, ist möglich.

Der erste Behälterteil kann mit mehreren Querwänden versehen sein, um eine Aufteilung in Fächer zu ermöglichen, die beispielsweise zur Aufnahme von unterschiedlichen Reparaturmaterialien verwendet werden können.

Bevorzugtes Material zur Herstellung des Sicherheitsbehälters ist schlag- und witterungsfester Kunststoff, wobei als Schloß ein übliches Metallschloß Verwendung finden kann. Die Kunststoffteile können auch mit Metallschellen kombiniert werden.

Was die Form des Behälters anbetrifft, so setzt hier die Erfindung grundsätzliche keine Grenzen. Die Form wird sich primär nach dem in dem Behälter unterzubringenden Inhalt und dem speziellen Rahmenelement richten, an dem der Behälter befestigt werden soll. So wird es beispielsweise bei Fahrrädern zweckmäßig sein, eine etwa an die Form der Rahmenstange angepaßte runde Behälterform zu wählen, wobei die Behälter hier vorteilhafterweise so ausgebildet sein sollten, daß sie die Unterbringung einer Luftpumpe ermöglichen. Die Rahmenstange kann sich auch völlig durch den Behälter erstrecken. Der Behälter dürfte daher für die meisten Anwendungsfälle rohrförmig auszubilden sein, was jedoch kastenförmige Ausführungsformen nicht ausschließen soll.

Der Behälter kann sowohl in Vertikalstellung als auch in Schräg- oder Horizontalstellung angebracht werden, je nach dem, welche Lage das entsprechende Rahmenelement einnimmt.

Weiterbildungen des Erfindungsgegenstandes gehen aus den Unteransprüchen hervor.

Die Erfindung wird nachfolgend anhand eines Ausführungsbeispiels in Verbindung mit der Zeichnung im einzelnen erläutert. Es zeigen :

Figur 1　eine Seitenansicht einer Ausführungsform eines Sicherheitsbehälters mit aufgesetztem und verschlossenem Deckel ;

Figur 2　eine Seitenansicht des in Figur 1 dargestellten Behälters mit abgenommenem Deckel ;

Figur 3　eine Unteransicht des Deckels ;

Figur 4　eine Draufsicht auf den schalenförmigen Behälterteil ; und

Figur 5　einen Querschnitt durch den mit einer Schelle an einem Rahmenelement befestigten Behälter.

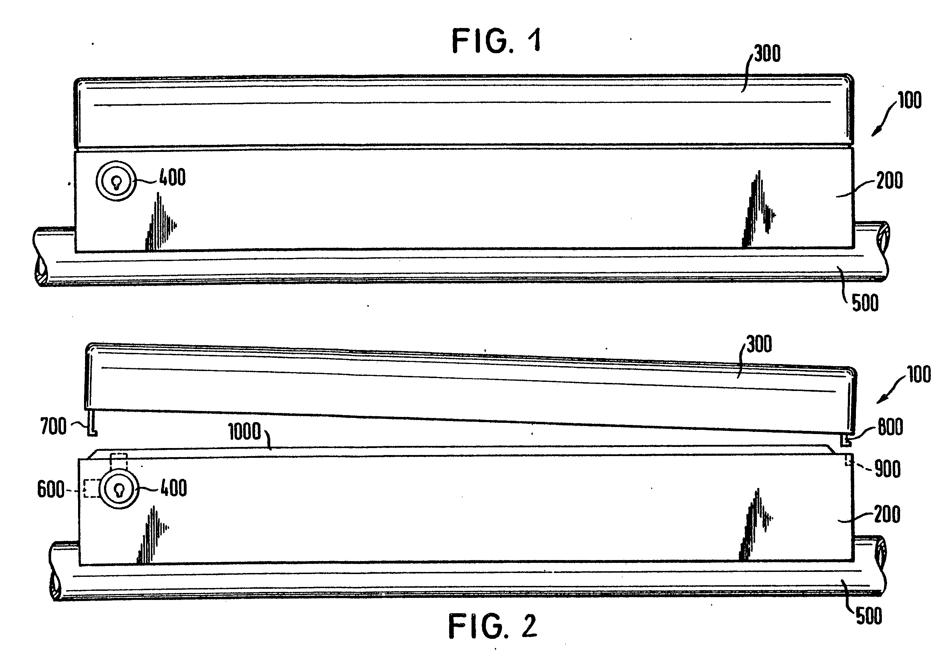

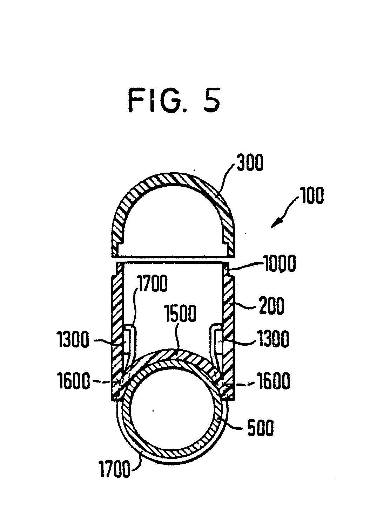

Der in den Figuren 1 bis 5 dargestellte Sicherheitsbehälter 100 umfaßt einen ersten schalenförmigen Behälterteil 200, der an einem entsprechenden Rahmenelement, beispielsweise einer Rahmenstange 500, eines Zweirades befestigbar ist, un einen in Form eines Deckels ausgebildeten zweiten Behälterteil 300. Beide Behälterteile sind so ausgebildet, daß bei aufgesetztem Deckel ein geschlossenes Behältnis gebildet wird, wobei die Seiten- und Endwände der beiden Behälterteile ineinander übergehen. Am vorderen Ende des schalenförmigen Behälterteils 200 ist ein Schloß 400 angebracht, das über einen geeigneten Schlüssel (nicht gezeigt) betätigbar ist.

Figur 2 zeigt den Sicherheitsbehälter beim Aufsetzen des zweiten Behälterteils 300. Dieser zweite Behälterteil 300 weist an seinem vorderen Ende ein nach unten vorstehendes Verriegelungselement 700 auf, das einen abgewinkelten Endteil besitzt. Wenn der Deckel aufgesetzt ist, wird durch Drehen des in das Schloß 400 gesteckten Schlüssels eine Verriegelungslasche 600 so verdreht, daß sie sich an den abgewinkelten Endteil des Verriegelungselementes 700 legt und somit den Deckel gegen Abheben verriegelt. Am rückwärtigen Ende weist der zweite Behälterteil 300 eine Rastnase 800 auf, die beim Aufsetzen des Deckels auf den schalenförmigen Behälterteil 200 unter eine Halterung 900 an der Endwand des Behälterteils 200 greift. Damit wird verhindert, daß dieses Ende des Deckels abgehoben werden kann. Der Behälterdeckel wird so aufgesetzt, daß erst das mit der Rastnase 800 versehene Ende auf den schalenförmigen Behälterteil 200 aufgesetzt wird, bis die Rastnase 800 die entsprechende Halterung 900 untergriffen hat, wonach das mit dem Verriegelungselement 700 versehene Deckelende aufgesetzt wird. Zur Arretierung des Deckels auf dem schalenförmigen Behälterteil 200 sind an den oberen Enden von dessen Seitenwänden innere Führugsstege 1 000 vorgesehen, die in entsprechende Ausnehmungen an der Innenseite der Seitenwände des Deckels eingreifen.

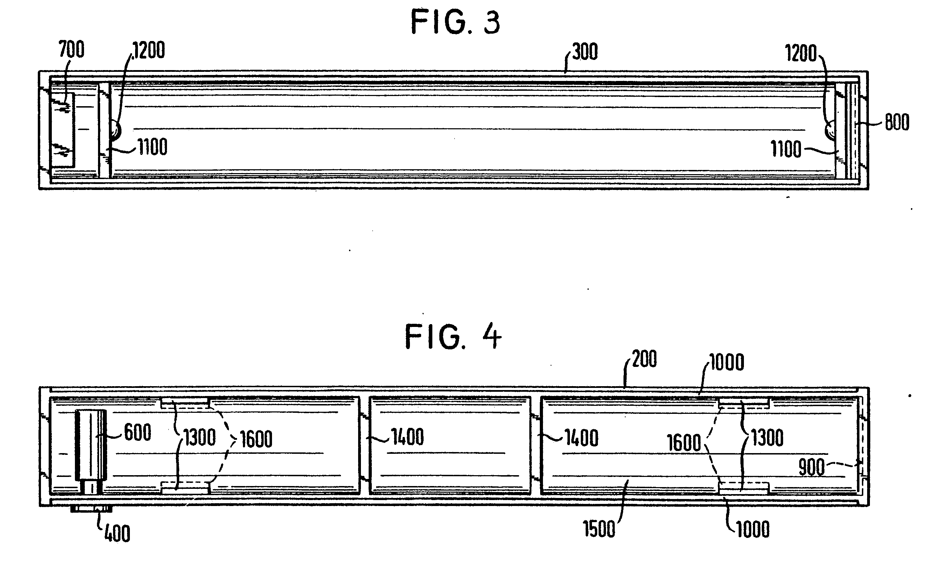

Figur 3 zeigt den zweiten Behälterteil 300 in der Unteransicht. Bei dem hier dargestellten Ausführungsbeispiel soll der Sicherheitsbehälter zur Aufnahme von Reparaturmaterial bzw. Zubehör für das Zweirad dienen. Der zweite Behälterteil 300 ist daher so ausgebildet, daß er eine Luftpumpe aufnehmen kann, die zwischen zwei Nasen 1 200 geklemmt wird, die an entsprechenden Querwänden 1 100 des Deckels angebracht sind.

Figur 4 zeigt den schalenförmigen Behälterteil 200 in der Draufsicht. Der Behälterteil ist mit einem Boden 1 500 versehen, der an die Form des Rahmenelementes 500 angepaßt und somit im Querschnitt etwa kreisförmig gekrümmt ist. Auch der Behälterteil 200 ist mit Querwänden 1 400 versehen, um eine Aufteilung in mehrere Fächer zur Aufnahme von Reparaturmaterial zu ermöglichen.

Die Befestigung des Sicherheitsbehälters 100 am Rahmenelement erfolgt folgendermaßen :

Der schalenförmige bzw. erste Behälterteil 200 wird mit Hilfe von zwei Schellen 1 700 am Rahmenelement 500 befestigt, wie dies in Figur 500 dargestellt ist. Die Schellen 1 700 sind so ausgebildet, daß sie das Rahmenelement 500 umgreifen und zwei nach oben ragende Enden aufweisen, deren Endabschnitte nach außen abgewinkelt sind. Nachdem die beiden Schellen 1 700 am Rahmenelement befestigt sind, wird der erste Behälterteil 200 auf die Schellen gesetzt, wobei diese durch im Boden 1 500 des Behälterteils vorgesehene Öffnungen 1 600 in den Behälterteil eingreifen. Die freien Enden der Schellen werden dabei etwas nach innen gedrückt und somit unter Vorspannung gesetzt. Sie gleiten an Arretierungsnasen 1 300 aufwärts, die gegenüberliegend an den Innenseiten der Seitenwände des Behälterteils 200 im Bereich der Öffnungen 1 600 angeordnet sind. Die abgewinkelten Endbereiche der Schellenenden schnappen schließlich infolge ihrer Vorspannung hinter die Arretierungsnasen 1 300, so daß der schalenförmige Behälterteil 200 sicher am Rahmenelement 500 befestigt ist. Es kann jetzt der zweite Behälterteil 300 in der vorstehend beschriebenen Weise aufgesetzt und der Sicherheitsbehälter verschlossen werden.

Ein Öffnen des Behälters und eine Abnahme desselben vom Rahmenelement erfolgt in umgekehrter Weise, wobei die Schellenenden mit Hilfe eines geeigneten Werkzeuges nach innen gedrückt und somit von den Arretierungsnasen gelöst werden können, der Behälterteil 200 kann dann nach oben vom Rahmenelement abgezogen werden.

**Patentansprüche**

1. Abschließbarer Sicherheitsbehälter (100) für Zweiräder, der an einem langgestreckten Rahmenelement des Zweirades, insbesondere einer Stange (500), befestigbar ist, mit zwei schalenförmigen Behälterteilen (200, 300), von denen einer mit einer abschließbaren, mit einem am anderen Behälterteil angeordneten Verriegelungselement in Eingriff bringbaren Verriegelungseinrichtung versehen ist, und mit mindestens einem mit dem einen Behälterteil (200) lösbar verbindbaren und am Rahmenelement befestigbaren Rast- bzw. Klemmverbindungselement, dadurch gekennzeichnet, daß der eine schalenförmige Behälterteil (200) das Rahmenelement (500) zumindest teilweise umgreift und an seiner vom Rahmenelement (500) abgewandten Seite offen und dort durch den als Behälterdeckel ist ausgebildeten anderen Behälterteil (300) verschließbar und daß das Rast- bzw. Klemmverbindungselement in den einen schalenförmigen Behälterteil (200) eingreift und im Inneren desselben mit diesem verbindbar ist, wobei diese Verbindung nur bei abgenommenem Behälterdeckel lösbar ist.

2. Sicherheitsbehälter nach Anspruch 1, dadurch gekennzeichnet, daß das Rast- bzw. Klemmverbindungselement als das Rahmenelement (500) umgreifende und durch den einen Behälterteil (200) unter Klemmspannung setzbare Schelle (1 700) ausgebildet ist.

3. Sicherheitsbehälter nach Anspruch 2, dadurch gekennzeichnet, daß die freien Schellenenden durch eine Schnappverbindung mit an der Innenseite des einen Behälterteils (200) angeordneten Arretierungselementen (1 300) in Eingriff bringbar sind.

4. Sicherheitsbehälter nach einem der vorangehenden Ansprüche, dadurch gekennzeichnet, daß der eine Behälterteil (200) im Querschnitt U-förmig ausgebildet ist.

5. Sicherheitsbehälter nach einem der vorangehenden Ansprüche, dadurch gekennzeichnet, daß der eine Behälterteil (200) mit einem an die Form des Rahmenelementes (500) angepaßten Boden (1 500) versehen ist.

6. Sicherheitsbehälter nach einem der vorangehenden Ansprüche, dadurch gekennzeichnet, daß beide Behälterteile (200, 300) komplementäre Rast- bzw. Klemmverbindungselemente zur lösbaren Befestigung aneinander aufweisen.

7. Sicherheitsbehälter nach einem der vorangehenden Ansprüche, dadurch gekennzeichnet, daß die Verriegelungseinrichtung ein mit einem Schlüssel betätigbares Schloß (400) umfaßt, das mit einer drehbaren Verriegelungslasche (600) versehen ist, die sich in ihrer Schließstellung gegen eine am anderen Behälterteil (300) vorgesehene Verriegelungslasche (700) legt.

8. Sicherheitsbehälter nach einem der vorangehenden Ansprüche, dadurch gekennzeichnet, daß der andere Behälterteil (300) an einer Endwand mit einer eine Halterung (900) an der Endwand des einen Behälterteils (200) hintergreifenden Rastnase (800) und an der anderen Endwand mit dem Verriegelungselement (700) für die seitlich am einen Behälterteil (200) angebrachte Verriegelungseinrichtung (Schloß 400) versehen ist.

9. Sicherheitsbehälter nach einem der vorangehenden Ansprüche, dadurch gekennzeichnet, daß am offenen Ende der Seitenwände des einen Behälterteils (200) innere Führungsstege (1 000) für den anderen Behälterteil (300) angeordnet sind.

10. Sicherheitsbehälter nach einem der vorangehenden Ansprüche, dadurch gekennzeichnet, daß der andere Behälterteil (300) im vorderen und hinteren Endbereich je eine Querwand (1 100) mit einer nach innen vorstehenden Nase (1 200) zum Festklemmen einer Luftpumpe aufweist.

11. Sicherheitsbehälter nach Anspruch 5, dadurch gekennzeichnet, daß der Boden (1 500) des ersten Behälterteils (200) mit mindestens zwei gegenüberliegenden Randöffnungen (1 600) zur Durchführung der freien Schellenenden ausgestattet ist.

12. Sicherheitsbehälter nach Anspruch 11, dadurch gekennzeichnet, daß an den Seitenwänden des einen Behälterteils (200) oberhalb der Bodenöffnungen (1 600) als Arretierungselemente (1 300) nach innen vorspringende Arretierungsnasen vorgesehen sind, die von den abgewinkelten freien Schellenenden hintergriffen werden.

13. Sicherheitsbehälter nach einem der vorangehenden Ansprüche, dadurch gekennzeichnet, daß der eine Behälterteil (200) mindestens eine Querwand (1 400) aufweist.

**Claims**

1. A lockable safety-container (100) for two-wheelers adapted to be mounted on an elongated frame member of the two-wheeler, especially a bar (500), said container comprising two shell-like container members (200, 300) one of which being provided with locking means adapted to be locked up and engagable with a locking member located at the other container member, and at least one snap-in or clamp connection member removably connectable with said one container member (200), characterized in that said one shell-like container member (200) at least partly encompasses the frame member (500) and is open on its side turned away from said frame member (500) and is lockable there by said other container member (300) which is formed as container lid, and in that said snap-in or clamp connection member engages into said one shell-like container member (200) and is connectable with the same in the interior thereof, this connection being disconnectable only when the container lid is removed.

2. The safety-container according to claim 1, characterized in that said snap-in or clamp connection member is formed as clip (1 700) encompassing said frame member (500) and adapted to be brought under clamp tension by means of said one container member (200).

3. The safety-container according to claim 2, characterized in that the free clip ends are engageable with retaining members (1 300) located on the inner side of said one container member (200) by means of a snap connection.

4. The safety-container according to one of the preceding claims, characterized in that said one container member (200) has a U-shaped cross-section.

5. The safety-container according to one of the preceding claims, characterized in that said one container member (200) is provided with a bottom (1 500) adapted to the shape of the frame member (500).

6. The safety-container according to one of the preceding claims, characterized in that the two container members (200, 300) include complementary snap-in or clamp connection members for disconnectably fastening with one another.

7. The safety-container according to one of the preceding claims, characterized in that said locking means comprises a lock (400) actuatable by means of a key, said lock being provided with a rotatable locking tongue (600) which, in its closing position, engages a locking tongue (700) provided at the other container member (300).

8. The safety-container according to one of the preceding claims, characterized in that said other container member (300) is provided at one end wall with a snap lug (800) grasping behind a retainer (900) at the end wall of said one container member (200) and at the end wall of said one container member (200) and at the other end wall with said locking member (700) for said locking means (lock 400) laterally located at one container member (200).

9. The safety-container according to one of the preceding claims, characterized in that inner guide webs (1 000) for said other container member (300) are located at the open end of the side walls of said one container member (200).

10. The safety-container according to one of the preceding claims, characterized in that said other container member (300) has a cross wall (1 100) in the front and rear end portion, said cross wall including an interiorly protruding lug (1 200) for clamping a pneumatic pump.

11. The safety-container according to claim 5, characterized in that the bottom (1 500) of said first container member (200) is provided with at least two opposite edge apertures (1 600) for passing of the free clip ends.

12. The safety-container according to claim 11, characterized in that interiorly protruding retaining lugs are provided at the side walls of said one container member (200) above said bottom apertures (1 600), said retaining lugs serving as retaining members (1 300) and engaged behind by said angled free clip ends.

13. The safety-container according to one of the preceding claims, characterized in that said one container member (200) includes at least one cross wall (1 400).

**Revendications**

1. Réceptacle de sécurité (100), pouvant être fermé, pour bicyclettes et engins analogues, lequel peut être fixé à un élément de cadre, de grande étendue longitudinale, de la bicyclette, en particulier à une barre (500), comprenant deux parties de réceptacle en forme de coupe (à section arquée) (200, 300), dont l'une est pourvue d'un dispositif de verrouillage pouvant être fermé et être amené en prise avec un élément de verrouillage disposé sur l'autre partie de réceptacle, et comprenant un élément de jonction à cran ou à pince de serrage pouvant être relié de façon détachable à une partie (200) de réceptacle et être fixé à l'élément de cadre, caractérisé en ce que la partie de réceptacle (200) à section arquée enserre, au moins partiellement, l'élément de cadre (500) et est ouverte en son côté écarté de l'élément de cadre (500) et peut être fermée à cet endroit par l'autre partie de réceptacle (300) constituée comme couvercle du réceptacle et en ce que l'élément de jonction à cran ou à pince de serrage s'insère dans la partie de réceptacle (200) à section arquée et peut être assemblé avec elle à l'intérieur de celle-ci, cette jonction n'étant détachable que si le couvercle de réceptacle est enlevé.

2. Réceptacle de sécurité selon la revendication 1, caractérisé en ce que l'élément de jonction à cran ou à pince de serrage est constitué comme collier (1 700) enserrant l'élément de cadre (500) et pouvant mettre sous tension de serrage une partie de réceptacle (200).

3. Réceptacle de sécurité selon la revendication 2, caractérisé en ce que les extrémités libres du collier peuvent être amenées en prise par une jonction à déclic avec des éléments d'arrêt (1 300) disposés sur la face intérieure d'une partie de réceptacle (200).

4. Réceptacle de sécurité selon l'une des revendicataions précédentes, caractérisé en ce que l'une (200) des parties de réceptacle a une section transversale en forme de U.

5. Réceptacle de sécurité selon l'une des revendications précédentes, caractérisé en ce que l'une (200) des parties de réceptacle est pourvue d'un fond (1 500) adapté à la forme de l'élément de cadre (500).

6. Réceptacle de sécurité selon l'une des revendications précédentes, caractérisé en ce que les deux parties (200, 300) comportent des éléments d'assemblage complémentaires à cran ou à pince de serrage pour leur fixation mutuelle détachable.

7. Réceptacle de sécurité selon l'une des revendications précédentes, caractérisé en ce que le dispositif de verrouillage inclut une serrure (400) actionnable par une clé, qui est pourvue d'une bride de verrouillage pivotante (600), qui s'applique, dans sa position de fermeture, contre une bride de verrouillage (700) prévue sur l'autre partie de réceptacle (300).

8. Réceptacle de sécurité selon l'une des revendications précédentes, caractérisé en ce que l'autre partie de réceptacle (300) est pourvue, sur une paroi d'extrémité, d'un bec à cran (800) s'accrochant par derrière sur une attache (900) solidaire de la paroi d'extrémité de la partie d'extrémité (200) et, sur l'autre paroi d'extrémité, de l'élément de verrouillage (700) pour le dispositif de verrouillage (serrure 400) disposé latéralement par rapport à une partie de réceptacle (200).

9. Réceptacle de sécurité selon l'une des revendications précédentes, caractérisé en ce qu'à l'extrémité ouverte des parois latérales d'une certaine partie (200) de réceptacle des membrures de guidage intérieures (1 000) sont disposées pour guider l'autre partie (300) de réceptacle.

10. Réceptacle de sécurité selon l'une des revendications précédentes, caractérisé en ce que l'autre partie (300) de réceptacle présente, aussi bien dans la région d'extrémité avant que dans la région d'extrémité arrière, chaque fois une paroi transversale (1 100) avec un bec (1 200) saillant vers l'intérieur pour bloquer une pompe à air.

11. Réceptacle de sécurité selon la revendication 5, caractérisé en ce que dans le fond (1 500) de la première partie (200) du réceptacle, il est aménagé au moins deux ouvertures marginales (1 600) en regard l'une de l'autre pour laisser passer les extrémités libres du collier.

12. Réceptacle de sécurité selon la revendication 11, caractérisé en ce qu'il est prévu, sur les parois latérales de l'une (200) des parties de réceptacle, au-dessus des ouvertures de fond (1 600), comme éléments d'arrêt, des becs d'arrêt saillant vers l'intérieur, qui sont saisis par l'arrière par les extrémités libres et coudées du collier.

13. Réceptacle de sécurité selon l'une des revendications précédentes, caractérisé en ce que la susdite partie (200) de réceptacle comporte au moins une paroi transversale (1 400).

FIG. 1

FIG. 2

FIG. 3

FIG. 4

# FIG. 5